# EUROPEAN PATENT APPLICATION

(11) **EP 0 537 402 A1**
(43) Date of publication of application: **21.04.1993**
(21) Application number: 91500112.7
(22) Date of filing: 14.10.1991
(51) Int. Cl.: A23K 1/16, A23K 1/175, A23K 1/00

(54) **Correcting additive for feeding stuffs, on the basis of choline cloride**

(71) Applicant: QUIMICA MOBI, S.A., 22520 Fraga, Huesca (ES)
(72) Inventor: Guardiola, Antonio Santander, E-22520 Fraga (Huesca) (ES)
(74) Representative: Ferregüela Colon, Eduardo

(57) **Abstract**

A new choline chloride animal feed additive, in solid, granular or powdered form, with good flowing and stability properties. The additive comprises from 5% to 60% by weight of choline chloride absorbed on 40% to 95% by weight of a sepiolite type clay.

The additive prepared by mixing both components at a temperature ranging from 30°C to 70°C and subsequent drying by passage through an oven at an entry temperature ranging from 220 to 270°C and an exit temperature ranging from 80°C to 180°C.

Used in the manufacture of animal feeds.

## Description

The present invention relates to a choline chloride animal feed additive supplied in solid, granular or powder form, with good flowing and stability properties. In said additive, the choline chloride is absorbed on an inert mineral support of the sepiolite type. It also relates to a process for preparing said additive, and to the use thereof in the manufacture of animal feeds.

The supply of the vitamins required for correct nutrition of animals in modern industrial livestock raising is one of the essential aspects in the design and manufacture of feeds for this purpose.

This supply is usually made through the use of vitamin additives which, when mixed with the feeds, provide the required amounts of said vitamins to correct and balance shortages and deficiencies proper to the different basic nutrients comprising them.

The preparation of said additives suffers, depending on the nature of the vitamins to be used, from a number of industrial problems related mainly with the stability of said vitamin in the prepared product and the physical form of the additive, to the extent that it must be appropriate for achieving a correct mixture and dosage in the feed.

One of the vitamins required by livestock for nutrition is choline chloride. This product suffers from the drawback that, in crystalline form, it is highly hygroscopic, whereby it speedily attracts water and liquifies, making it impossible to be used industrially as a pure product in the manufacture of supplements.

For this puropose, it is usually used in the form of concentrated aqueous solutions in two different ways depending on the capacity and volume of the feed manufacturing plant.

If the production plant has a high production capacity, it may be used directly in liquid form, using an appropriate spray and mixing facility by spraying and absorption on the feed itself.

Nevertheless, this technique requires a costly installation which is only profitable when high production rates are achieved.

Therefore, a number of additives in solid form have been developed and which may be acquired by the feed manufacturer and be mixed in the feed in appropriate amounts.

These additives are prepared by absorption of concentrated choline chloride solutions containing from 60% to 80% by weight thereof on different inert solid substrates.

Synthetic and natural products of vegetal origin and of mineral origin are used as inert substrates.

Used among the vegetal origin substrates there are, for example, corn hull, apple marc, pieces of beet, soy-bean meal, starches, etc.

Generally speaking, these substrates may present absorption capacity, caking and degradation problems caused by microbial pollution.

Among those of mineral origin, there are used silica, as described in Hungarian patent no. 153,859, or silicates, as disclosed in British patent no. 1,163,596.

DE-A 3,409,063 teaches the use of silicic acid as absorbent, indicating the need to add calcium or magnesium stearate as fluidizing agent.

DE-A 2,653,533 proposes the use of volcanic rocks of the rhyolite family as absorbent substrate and, to be more precise, perlite.

The mineral substrates most used at the present time are silicic acid ones which, although they present a good absorption capacity for choline chloride, have the drawback of exhibiting crystals which may produce damage to the digestive track of the animals by tearing fibres.

The present invention solves these problems using, as inert absorbent substrate, a natural sepiolite type clay.

The sepiolites have excellent properties with respect to absorption power of concentrated choline chloride solutions and in view of their mineral structure, they do not offer the problem of crytalline forms capable of tearing fibres.

Furthermore, due to their excellent rheological properties, during the digestive process they increase the viscosity of the alimentary bolus producing an extension of the time it takes to pass through the intestine, and, therefore, a better intestinal absorption and biological use, not only of the choline chloride, but also of the remaining nutrients.

Thus, the object of the present invention is an additive for animal feeds, consisting of choline chloride absorbed on sepiolites, providing excellent properties of fluidity and stability.

A further object of the invention is a process for the preparation of said additive allowing for its easy industrial preparation.

Yet a further object of the invention is to provide feed manufacturers with a choline chloride additive allowing good dosification and mixing therewith.

The animal feed additive of the present invention consists of a granular or powdery solid containing from 5% to 60% by weight of choline chloride and from 40% to 95% by weight of a sepiolite.

According to a preferred embodiment of the present invention, the choline chloride contains, within the said limits, more than 40% by weight of choline chloride on the total additive weight.

Choline chloride is a water soluble vitamin having the following chemical formula:

HO-CH₂-CH₂-N⁺(CH₃)₃.Cl⁻

which is found easily on the market in the form of aqueous solutions at a concentration of from 60% by weight to 80% by weight.

The sepiolites used in the present invention are natural clays chemically formed by hydrated magnesium silicates, of formula:

Si₁₂Mg₈O₃₀(H₂O)₄(OH)₄.8 H₂O

They have a fibrous structure with a high fluid absorption capacity and excellent rheological properties, i.e., they form stable high viscosity suspensions at lower concentrations than other types of clays.

This, together with the fact that their ion exchange capacity is low, makes their use as a mineral substrate in animal nutrition very favourable.

They are available on the market, among others, for example, under the mark HEXAL^{R} marketed by TOLSA, S.A.

The additives of the present invention are prepared in the following way:
The concentrated aqueous choline chloride solution is mixed, in an appropriate mixer, for example a rotary mixer, with the sepiolite at the appropriate rates, to provide a paste. To achieve good absorption during the mixing, the temperature is held to between 30° and 70°C.

To achieve an appropriate residual moisture level, the paste is circulated through an appropriate oven, for example a rotary oven, at an entry temperature ranging from 220° to 270°C and an exit temperature ranging from 80° to 180°C. It is important to stay within the fixed parameters, so that the sepiolite does not lose its biological properties.

In this way, the product is dried until it contains a residual moisture level ranging from 0.5% to 2% by weight of water on the total product weigh. This product has the appearance of a powdery granular solid with good fluidity and caking resistance.

The particle size of the starting sepiolite ranges preferably from 40 to 200 microns, so that an end product is obtained in which at least 80% of the granules have sizes ranging from 100 to 5,000 microns, preferably from 500 to 2,500 microns.

The feed additive thus obtained may be used directly in the manufacture of feeds, by mixing therewith at rates ranging from 0.1% to 5% by weight.

It may also be used for manufacturing vitamin concentrates by mixing with another type of vitamins.

To clarify the essential aspects of the present invention, certain specific embodiments are described hereinafter, which must not be taken as limitations thereof, in the form of the following

### EXAMPLES

### Example I

67 kg of 75% aqueous choline chloride were added in a Lodige type mixer to 54.5 kg of HEXAL^{R} 60-120 (sepiolite marketed by TOLSA, S.A.) and the mixing was performed while holding the temperature of the mass to between 40°C and 45°C.

Once a homogenous paste was obtained, this was fed to a rotary oven at an entry temperature ranging from 240°C to 250°C and the dwell time therein was sufficient for the exit temperature to range from 145°C to 155°C and the residual moisture of the product obtained to lie between 0.75% and 1.5%.

In this way 100 kg of product containing 50% choline chloride were obtained.

The product had the appearance of a granular powder, in which at least 80% were granules having a size ranging from 800 to 1.200 microns.

This powder flowed easily and did not exhibit appreciable caking after two months storage, in appropriate plastified packs, between 15°C and 25°C.

### Example II

In the same way as described for Example I, but replacing the HEXAL^{R} 60-120 with HEXAL^{R}-H, a product was obtained with the same proportion of choline chloride but with a particle size such that 80% by weight were granules having a size ranging from 1,800 to 2,200 microns.

This product flowed easily and did not exhibit caking after two months storage under the above described conditions.

### Examples III to VI

In the same way as in Example I and varying the choline chloride and HEXAL^{R} 60-120 proportions, the following products were obtained with the indicated choline chloride proportions:
III. 15% by weight.
IV. 25% by weight.
V. 40% by weight.
VI. 60% by weight.

All the products exhibited good fluidity and caking resistance properties.

## Claims

1. A choline chloride animal feed additive, in solid form, exhibiting good flowing and stability properties, characterized in that the choline chloride is absorbed on an inert sepiolite type substrate at a rate from 5% to 60% by weight of choline chloride and from 40% to 95% by weight of sepiolite.

2. An animal feed additive, according to claim 1, characterized in that it contains more than 40% by weight of choline chloride absorbed on sepiolite, based on the total additive weight.

3. A process for preparing a choline chloride animal feed additive, in solid form with good flowing and stability properties, characterized in that a paste is formed by mixture of a concentrated aqueous choline chloride solution and a powdered sepiolite, and said paste is dried by feeding through an appropriate oven, such that in the end product there is a residual moisture ranging from 0.50% to 1.50% by weight of water based on the total product.

4. A process for preparing an animal feed additive, according to claim 3, characterized in that the mixing is performed at a temperature ranging from 30°C to 70°C.

5. A process for obtaining an animal feed additive, according to claim 3, characterized in that the entry temperature to the oven ranges from 220°C to 270°C and the exit temperature ranges from 80°C to 180°C.

6. The use of a choline chloride additive in animal feed, in solid form, and exhibiting good flowing and stability properties, characterized in that, in said additive, choline chloride is absorbed on an inert sepiolite type substrate at a rate of from 5% to 60% by weight of choline chloride and from 40% to 95% by weight of sepiolite.

7. The use of an additive in the manufacture of compound feeds, according to claim 6, characterized in that said additive contains more than 40% by weight of choline chloride, absorbed on sepiolite, based on the total additive weight.
